(19) Europäisches Patentamt
European Patent Office
Office européen des brevets

(11) **EP 3 117 516 B1**

(12) **FASCICULE DE BREVET EUROPEEN**

(45) Date de publication et mention de la délivrance du brevet:
**12.10.2022 Bulletin 2022/41**

(21) Numéro de dépôt: **15709271.9**

(22) Date de dépôt: **18.02.2015**

(51) Classification Internationale des Brevets (IPC):
**H02P 21/05** *(2006.01)* **H02P 23/04** *(2006.01)*

(52) Classification Coopérative des Brevets (CPC):
**H02P 23/04; H02P 21/05**

(86) Numéro de dépôt international:
**PCT/FR2015/050392**

(87) Numéro de publication internationale:
**WO 2015/136173 (17.09.2015 Gazette 2015/37)**

(54) **PROCÉDÉ ET SYSTÈME DE COMMANDE D'UNE MACHINE ÉLECTRIQUE TRIPHASÉE DE VÉHICULE AUTOMOBILE**

VERFAHREN UND SYSTEM ZUR STEUERUNG EINES DREIPHASIGEN ELEKTROMOTORS EINES KRAFTFAHRZEUGS

METHOD AND SYSTEM FOR CONTROLLING A TRIPLE-PHASE ELECTRICAL MACHINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2014 FR 1451976**

(43) Date de publication de la demande:
**18.01.2017 Bulletin 2017/03**

(73) Titulaire: **Renault s.a.s**
**92100 Boulogne Billancourt (FR)**

(72) Inventeur: **MALOUM, Abdelmalek**
**F-94550 Chevilly Larue (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
| | |
|---|---|
| **EP-A1- 0 682 827** | **EP-A1- 1 683 705** |
| **EP-A1- 1 906 523** | **EP-A1- 2 375 564** |
| **WO-A2-2011/012436** | **FR-A3- 2 978 888** |
| **US-A1- 2011 175 556** | |

**Description**

L'invention a pour domaine technique les moteurs électriques à rotor bobiné, et en particulier l'atténuation d'harmoniques de courant dans de tels moteurs électriques.

Dans le cadre du développement des véhicules électriques, le couple fourni par le moteur électrique doit être contrôlé. Le couple d'une machine étant directement lié aux courants circulant dans celui-ci, il faut donc pouvoir contrôler de façon précise ces courants. Le moteur électrique à contrôler peut notamment être une machine synchrone triphasée à rotor bobiné.

Un moteur électrique de type synchrone à rotor bobiné comprend une partie fixe appelée stator et une partie mobile appelée rotor. Le stator comprend trois bobines décalées de 120° et alimentées en courant alternatif. Le rotor comprend une bobine alimentée en courant continu.

Les courants dans les trois phases du stator sont sinusoïdaux et déphasés chacun de 2π/3 rad. Ces courants créent un champ magnétique tournant dans la machine. Le rotor est parcouru par un courant continu ce qui crée un champ magnétique et le rend équivalent à un aimant. Pour réaliser le couple mécanique, le champ magnétique statorique est piloté en quadrature, c'est-à-dire en déphasage piloté constant de 90° avec le champ magnétique rotorique. Ainsi la fréquence de rotation du champ magnétique du rotor est égale à la fréquence des courants du stator d'où le nom de « synchrone ». Ce sont les amplitudes des courants du stator et la valeur du courant du rotor qui créent le couple nécessaire à la rotation de la machine. Pour commander ces courants, il faudra donc appliquer entre les phases du stator des tensions sinusoïdales, déphasées entre elles de 2π/3 rad et appliquer au rotor une tension constante.

La régulation des courants d'un moteur synchrone à rotor bobiné présente des difficultés du fait de la synchronisation des courants sinusoïdaux du stator avec la rotation du moteur.

Pour cela, on dispose d'un onduleur permettant de commander la tension des phases du stator et d'un hacheur (convertisseur de tension statique continu-continu) pour commander la tension du rotor.

Par ailleurs, on utilise la transformée de Park pour projeter les courants et les tensions du stator dans un espace où les signaux sinusoïdaux deviennent des constantes. Le repère de Park correspond à un repère lié au champ tournant donc lié au rotor dans le cas de la machine synchrone. L'utilisation de la transformée de Park permet d'avoir à réguler des constantes, ce qui est beaucoup plus facile à réaliser que de réguler des signaux sinusoïdaux.

Les signaux appliqués au stator sont notés $V_d$, $V_q$. Le signal appliqué au rotor est noté $V_f$.

$$\begin{cases} V_d = R_s I_d + L_d \frac{dI_d}{dt} + M_f \frac{dI_f}{dt} - \omega_r L_q I_q \\ V_q = R_s I_q + L_q \frac{dI_q}{dt} + \omega_r \left(L_d I_d + M_f I_f\right) \\ V_f = R_f I_f + L_f \frac{dI_f}{dt} + \frac{3}{2} M_f \frac{dI_d}{dt} \end{cases} \qquad (Eq.\ 1)$$

Avec :

$V_d$ et $V_q$ : les tensions appliquées respectivement sur les deux axes du plan de Park de la machine (en Volt), c'est-à-dire l'axe direct et l'axe en quadrature

$V_f$ : tension appliquée au rotor (en Volt)

$I_d$ et $I_q$: les courants circulant respectivement dans le stator sur les deux axes du plan de Park (en Ampère) direct et en quadrature

If : le courant circulant dans le rotor (en Ampère)

$R_s$ et $R_f$ : les résistances respectives du stator et du rotor de la machine (en Ohm)

$L_d$ et $L_q$: les inductances respectives sur les axes direct et en quadrature et du stator (en Henry)

et $L_f$ : inductance du rotor (en Henry)

$M_f$ : l'inductance mutuelle entre le stator et le rotor (en Henry)

α : un terme constant issu de la transformée de Park (sans unité)

$\omega_r$ : la vitesse de rotation du champ magnétique de la machine (en rad/s)

Dans le cas d'une machine synchrone, la vitesse $\omega_r$ est égale à la vitesse de rotation du rotor multipliée par le nombre de paires de pôles de la machine.

Les valeurs Ld, Lq, Lf, Rs, Rf et Mf sont connues par des mesures préalables.

**EP 3 117 516 B1**

Les tensions Vd et Vq sont créées avec un onduleur, la tension Vf est créée avec un hacheur, ces deux systèmes étant alimentés par une batterie. Les contraintes de tension sont les suivantes :

$$\begin{cases} V_d^2 + V_q^2 & \leq & \dfrac{V_{bat}^2}{3} \\ 0 & \leq V_f \leq & V_{bat} \end{cases} \qquad (Eq.\ 2)$$

Avec Vbat : la tension de la batterie qui alimente l'onduleur et le hacheur.

Toutefois, un tel système présente des oscillations de couple qui peuvent engendrer une divergence du régulateur de courant.

En effet, il est connu qu'en appliquant des tensions hachées à n'importe qu'elle machine triphasée et avec une mauvaise qualité des mesures de courant, on observe des oscillations de courant à certaines fréquences correspondant à des harmoniques de la fréquence électrique (fréquence de rotation du rotor de la machine). Ces oscillations de courant génèrent ensuite des oscillations de couple.

Ainsi, en voulant augmenter la puissance de la machine triphasée à 70kW, les capteurs de courant fournissent une mesure beaucoup moins précise des courants triphasés ce qui rend le régulateur moins efficace.

Il existe donc un besoin pour une réduction de ces oscillations de courant.

De l'état de la technique antérieure, on connaît les documents suivants.

Le document EP 0682827 divulgue un oscillateur commandé en tension présentant une compensation de traitement efficace. Il est décrit que l'atténuateur est un filtre à boucle et à phase asservie apte à produire un signal de courant de commande vers un oscillateur en anneau. L'atténuateur reçoit un courant d'alimentation créé par soustraction de deux courants en utilisant un sous-circuit de différentiation atténuant ainsi les oscillations de courant.

Le document EP 2460244 divulgue un dispositif de compensation des oscillations harmoniques se produisant sur les chemins de courant d'un réseau à haute tension. Le document divulgue un dispositif de compensation comprenant une source de tension asservie pouvant être connectée en parallèle du réseau à haute tension par l'intermédiaire d'un filtre passif. Afin de permettre une régulation hautement dynamique et stable de la compensation des oscillations harmoniques, il est proposé que l'unité de régulation possède un filtre du signal destiné à supprimer une composante à la fréquence du réseau dans la tension de raccordement.

Le document FR2978888 propose de diminuer la signature acoustique d'une machine synchrone à rotor bobiné en augmentant les contributions harmoniques issues des mesures de courant. Pour cela on obtient par filtrage des mesures de courant corrigées qui sont injectées dans les boucles de régulation de la machine électrique en lieu et place des mesures de courant non corrigées.

Le document EP 1906523 décrit un procédé pour contrôler un moteur synchrone à rotor bobiné fournissant un couple stable.

Il demeure donc un besoin pour un procédé et un système permettant de réduire les oscillations de courant à leur source.

Un procédé selon l'invention est défini par la revendication 1 et un système selon l'invention est défini par la revendication 2.

Le procédé et le système de commande présentent l'avantage d'un découplage entre les différentes phases, permettant une activation sélective de l'atténuation des oscillations de courant sur au moins une des phases d'alimentation de la machine électrique.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un système de commande selon l'invention, et
- la figure 2 illustre les principales étapes d'un procédé de commande selon l'invention.

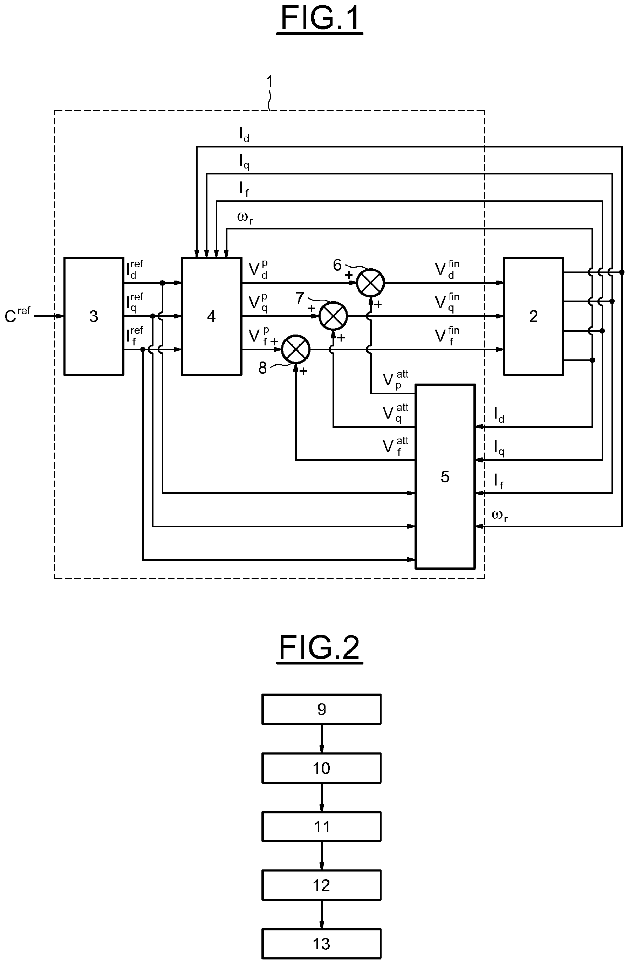

Le système de commande 1, illustré par la figure 1, d'une machine électrique 2 comprend un moyen de détermination 3 de courants de référence $I_d^{ref}, I_q^{ref}, I_f^{ref}$ relatifs à chacune des phases de la machine électrique dans le repère (d,q,f) de Park en fonction d'une requête de couple du conducteur $C^{ref}$.

Le système de commande 1 comprend un moyen de détermination 4 des tensions d'alimentation des phases de la machine électrique. Ce moyen de détermination 4 est un premier régulateur de type PID. Le moyen de détermination 4 détermine des tensions $V_d^p, V_q^p, V_f^p$ d'alimentation de chacune des phases de la machine électrique en fonction des courants de référence $I_d^{ref}, I_q^{ref}, I_f^{ref}$, de mesures des courants de chaque phase $I_d, I_q, I_f$ ainsi que d'une mesure de la vitesse de rotation $\omega_r$ du champ magnétique, reçues en entrée.

Le système de commande 1 comprend également un moyen de détermination 5 de tensions d'atténuation

3

recevant en entrée les mesures des courants de chaque phase $I_d, I_q, I_f$, les valeurs des courants de référence $I_d^{ref}, I_q^{ref}, I_f^{ref}$, ainsi que la mesure de la vitesse de rotation $\omega_r$ du champ magnétique. Le moyen de détermination 5 de tensions d'atténuation émet en sortie des tensions d'atténuation $V_d^{att}$, $V_q^{att}$, $V_f^{att}$ des oscillations de courants relatifs à chaque phase. Le moyen de détermination 5 est un deuxième régulateur distinct du premier régulateur 4.

Un premier sommateur 6 réalise la sommation entre la tension d'alimentation de la phase d et la tension d'atténuation correspondante. Il émet en sortie une consigne de tension finale relative à la phase d.

Un deuxième sommateur 7 et un troisième sommateur 8 réalisent des sommations similaires sur les valeurs relatives respectivement à la phase q et à la phase f.

Ainsi, lors du démarrage du système, le courant de référence de chaque phase sert uniquement de base au moyen de détermination 4 des tensions afin de déterminer les tensions d'alimentation.

Le moyen de détermination 5 de tensions d'atténuation n'émet alors aucune valeur des tensions d'atténuation de sorte que les sommateurs 6,7,8 transmettent sans modification les tensions d'alimentation en tant que consignes de tension finales à destination de la machine électrique.

Toutefois, dès que les mesures des courants de chaque phase $I_d, I_q, I_f$ ainsi que la mesure de la vitesse de rotation $\omega_r$ du champ magnétique sont disponibles, elles sont prises en compte par le moyen de détermination 4 des tensions lors de la détermination des tensions d'alimentation.

Le moyen de détermination 5 de tensions d'atténuation émet alors des valeurs des tensions d'atténuation de sorte que les sommateurs 6,7,8 déterminent des consignes de tension finales à destination de la machine électrique par sommation des tensions d'alimentation de chaque phase aux tensions d'atténuation des phases correspondantes.

Un moyen de saturation, non représenté sur la figure 1, réalise la saturation des consignes de tension finales en fonction de la tension de batterie avant de les transmettre à la machine électrique.

Le procédé de commande d'une machine électrique permet d'apporter une correction dynamique des tensions d'alimentation de la machine électrique 2 de manière à réduire l'amplitude des oscillations de courant, ce qui permet de réduire l'amplitude des oscillations de couple en sortie de la machine électrique.

Sur la figure 2, on peut voir que le procédé débute par une étape 9 de détermination des courants de référence $I_d^{ref}, I_q^{ref}, I_f^{ref}$ en fonction de la requête de couple du conducteur $C^{ref}$. Une telle étape est connue de l'état de l'art de sorte qu'elle n'est pas décrite ici par souci de brièveté.

Au cours d'une deuxième étape 10, on détermine des tensions $V_d^p, V_q^p, V_f^p$ d'alimentation de chaque phase de la machine électrique en fonction des courants de référence $I_d^{ref}, I_q^{ref}, I_f^{ref}$, de mesures des courants de chaque phase $I_d, I_q, I_f$ ainsi que d'une mesure de la vitesse de rotation $\omega_r$ du champ magnétique de la machine électrique.

Au cours d'une troisième étape 11, on détermine des tensions d'atténuation en fonction des courants de référence $I_d^{ref}, I_q^{ref}, I_f^{ref}$ et de mesures des courants de chaque phase $I_d, I_q, I_f$ ainsi que de la mesure de la vitesse de rotation $\omega_r$ du champ magnétique de la machine électrique.

Pour cela, on applique les équations suivantes :

$$\begin{cases} V_d^{att} & = & K_d\left(I_d^{ref} - I_d\right) \\ V_q^{att} & = & K_q\left(I_q^{ref} - I_q\right) \\ V_f^{att} & = & K_f\left(I_f^{ref} - I_f\right) \end{cases} \qquad (Eq.\ 3)$$

Avec :

$I_d^{ref}$ : le courant de référence relatif à la phase de l'axe d.

$I_q^{ref}$ : le courant de référence relatif à la phase de l'axe q.

$I_f^{ref}$ : le courant de référence relatif à la phase de l'axe f

$K_d, K_q, K_f$ : des paramètres de réglage.

Comme on peut le voir, cette étape permet de déterminer une tension d'atténuation $V_d^{att}$ selon l'axe d ne dépendant que du courant $I_d$ de l'axe d. De même, la tension d'atténuation $V_q^{att}$ selon l'axe q et la tension d'atténuation $V_f^{att}$ du rotor ne dépendent respectivement que du courant $I_q$ de l'axe q et du courant $I_f$ de l'axe f relatif au rotor.

Cette étape permet ainsi d'atténuer les oscillations de courant en contrôlant les erreurs entre les courants de référence et les courants circulant effectivement dans les phases de la machine électrique pour les ramener à zéro. En d'autres termes, on augmente la marge de phase du régulateur principal, car on redouble le bouclage sur le courant.

Au cours d'une quatrième étape 12, on additionne les tensions d'atténuation relatives à chaque phase aux tensions d'alimentation relatives aux phases correspondantes Les équations suivantes permettent de déterminer les consignes de tension finales issues de la sommation:

$$\begin{cases} V_d^{fin} &=& V_d^{att} + V_d^{p} \\ V_q^{fin} &=& V_q^{att} + V_q^{p} \\ V_f^{fin} &=& V_f^{att} + V_f^{p} \end{cases} \qquad (Eq. 4)$$

Avec

$V_d^{fin}$ : consigne de tension finale relative à la phase d

$V_q^{fin}$ : consigne de tension finale relative à la phase q

$V_f^{fin}$ : consigne de tension finale relative à la phase f

$V_d^{p}$ : tension d'alimentation relative à la phase d

$V_q^{p}$ : tension d'alimentation relative à la phase q

$V_f^{p}$ : tension d'alimentation relative à la phase f

Au cours d'une cinquième étape 13, on sature les consignes de tension finale calculées à la quatrième étape pour satisfaire les contraintes liées à la batterie en appliquant l'équation (Eq. 2). Les consignes de tension finales saturées sont alors émises vers la machine électrique.

Le procédé de commande obtenu est performant d'un point de vue de la fiabilité et robuste vis-à-vis des perturbations.

Il est à noter que le système et le procédé de commande de la machine électrique décrits ci-dessus peuvent s'appliquer à toutes machines électriques synchrones ou asynchrones.

## Revendications

1. Procédé de commande d'une machine électrique (2) triphasée à rotor bobiné de véhicule automobile alimentée par des tensions hachées et comprenant une étape de détermination de consignes de courant pour chaque phase de la machine électrique (2) incluant le courant rotor en fonction d'une requête de couple du conducteur, comprenant les étapes suivantes au cours desquelles :

   on détermine via un premier régulateur des tensions de chaque phase de la machine électrique (2) en fonction des courants de référence pour chaque phase et en fonction de mesures des courants de chaque phase ainsi que de la mesure de la vitesse de rotation du champ magnétique de la machine électrique (2),
   on détermine via un deuxième régulateur distinct du premier régulateur, des tensions d'atténuation des oscillations de courant de chaque phase de la machine électrique incluant une tension d'atténuation du rotor en fonction des courants de référence, de mesures des courants de chaque phase ainsi que de la mesure de la vitesse de rotation du champ magnétique de la machine électrique (2), la tension d'atténuation pour chaque phase dans le repère de Park étant déterminée comme le produit d'un paramètre de réglage par la différence du courant de référence et de la mesure de courant,
   on détermine des consignes de tension finales d'alimentation de la machine électrique en sommant les tensions d'alimentation relatives à chaque phase avec les tensions d'atténuation relatives aux phases correspondantes.

2. Système de commande d'une machine électrique (2) triphasée à rotor bobiné de véhicule automobile alimentée par des tensions hachées, et comprenant un moyen de détermination (3) de consignes de courant de chaque phase de la machine électrique incluant le courant rotor en fonction d'une requête de couple du conducteur, comprenant

   un moyen de détermination (4) de tensions d'alimentation de chaque phase de la machine électrique (2) en fonction des courants de référence pour chaque phase et en fonction de mesures des courants de chaque phase ainsi que de la mesure de la vitesse de rotation du champ magnétique de la machine électrique (2), utilisant un premier régulateur,

un moyen de détermination (5) de tensions d'atténuation des oscillations de courant de chaque phase de la machine électrique incluant une tension d'atténuation du rotor en fonction des courants de référence, de mesures des courants de chaque phase ainsi que de la mesure de la vitesse de rotation du champ magnétique de la machine électrique (2), utilisant un deuxième régulateur distinct du premier régulateur, la tension d'atténuation pour chaque phase dans le repère de Park étant déterminée comme le produit d'un paramètre de réglage par la différence du courant de référence et de la mesure de courant, et

des sommateurs (6,7,8) aptes déterminer des consignes de tension finales d'alimentation de la machine électrique en sommant les tensions d'atténuation relatives à chaque phase avec les tensions d'alimentation relatives aux phases correspondantes afin d'obtenir des consignes de tension finales d'alimentation de la machine électrique.

**Patentansprüche**

1. Verfahren zur Steuerung einer mit zerhackten Spannungen gespeisten elektrischen Drehstrommaschine (2) mit gewickeltem Rotor eines Kraftfahrzeugs, und das einen Schritt der Bestimmung von Stromsollwerten für jede Phase der elektrischen Maschine (2) einschließlich des Rotorstroms abhängig von einer Drehmomentanforderung des Fahrers enthält,

das die folgenden Schritte enthält, während denen:

mittels eines ersten Reglers Spannungen jeder Phase der elektrischen Maschine (2) abhängig von den Bezugsströmen für jede Phase und abhängig von Messungen der Ströme jeder Phase sowie der Messung der Drehgeschwindigkeit des Magnetfelds der elektrischen Maschine (2) bestimmt werden,

mittels eines zweiten Reglers anders als der erste Regler Dämpfungsspannungen der Stromschwankungen jeder Phase der elektrischen Maschine einschließlich einer Dämpfungsspannung des Rotors abhängig von den Bezugsströmen, Messungen der Ströme jeder Phase sowie der Messung der Drehgeschwindigkeit des Magnetfelds der elektrischen Maschine (2) bestimmt werden, wobei die Dämpfungsspannung für jede Phase im dp-Koordinatensystem als das Produkt aus einem Regelparameter und der Differenz des Bezugsstroms und der Strommessung bestimmt wird,

endgültige Speisespannungssollwerte der elektrischen Maschine durch Summieren der Speisespannungen bezüglich jeder Phase mit den Dämpfungsspannungen bezüglich der entsprechenden Phasen bestimmt werden.

2. System zur Steuerung einer mit zerhackten Spannungen gespeisten elektrischen Drehstrommaschine (2) mit gewickeltem Rotor eines Kraftfahrzeugs, und das eine Einrichtung (3) zur Bestimmung von Stromsollwerten jeder Phase der elektrischen Maschine einschließlich des Rotorstroms abhängig von einer Drehmomentanforderung des Fahrers enthält, das enthält:

eine Bestimmungseinrichtung (4) von Speisespannungen jeder Phase der elektrischen Maschine (2) abhängig von den Bezugsströmen für jede Phase und abhängig von Messungen der Ströme jeder Phase sowie der Messung der Drehgeschwindigkeit des Magnetfelds der elektrischen Maschine (2), unter Verwendung eines ersten Reglers,

eine Bestimmungseinrichtung (5) von Dämpfungsspannungen der Stromschwankungen jeder Phase der elektrischen Maschine einschließlich einer Dämpfungsspannung des Rotors abhängig von den Bezugsströmen, Messungen der Ströme jeder Phase sowie der Messung der Drehgeschwindigkeit des Magnetfelds der elektrischen Maschine (2), unter Verwendung eines zweiten Reglers anders als der erste Regler, wobei die Dämpfungsspannung für jede Phase im dp-Koordinatensystem als das Produkt aus einem Regelparameter und der Differenz des Bezugsstroms und der Strommessung bestimmt wird, und

Summierglieder (6, 7, 8), die geeignet sind, endgültige Speisespannungssollwerte der elektrischen Maschine durch Summieren der Dämpfungsspannungen bezüglich jeder Phase mit den Speisespannungen bezüglich der entsprechenden Phasen zu bestimmen, um endgültige Speisespannungssollwerte der elektrischen Maschine zu erhalten.

**Claims**

1. Method for controlling a wound-rotor three-phase electric machine (2) of a motor vehicle, which machine is powered by chopped voltages, and comprising a step of determining current setpoints for each phase of the electric machine (2), including the rotor current, as a function of a torque request from the driver, comprising the following steps, during which:

voltages of each phase of the electric machine (2) are determined, via a first controller, as a function of the reference currents for each phase and as a function of measurements of the currents of each phase as well as of the measurement of the speed of rotation of the magnetic field of the electric machine (2),

attenuation voltages for the current oscillations of each phase of the electric machine, including an attenuation voltage for the rotor, are determined, via a second controller which is distinct from the first controller, as a function of the reference currents, of measurements of the currents of each phase as well as of the measurement of the speed of rotation of the magnetic field of the electric machine (2), the attenuation voltage for each phase in the Park reference frame being determined as the product of a control parameter and the difference between the reference current and the current measurement,

final power-supply voltage setpoints for the electric machine are determined by summing the power-supply voltages relating to each phase and the attenuation voltages relating to the corresponding phases.

2. System for controlling a wound-rotor three-phase electric machine (2) of a motor vehicle, which machine is powered by chopped voltages, and comprising a means (3) for determining current setpoints for each phase of the electric machine, including the rotor current, as a function of a torque request from the driver, comprising:

a means (4) for determining power-supply voltages for each phase of the electric machine (2) as a function of the reference currents for each phase and as a function of measurements of the currents of each phase as well as of the measurement of the speed of rotation of the magnetic field of the electric machine (2), using a first controller,

a means (5) for determining attenuation voltages for the current oscillations of each phase of the electric machine, including an attenuation voltage for the rotor, as a function of the reference currents, of measurements of the currents of each phase as well as of the measurement of the speed of rotation of the magnetic field of the electric machine (2), using a second controller which is distinct from the first controller, the attenuation voltage for each phase in the Park reference frame being determined as the product of a control parameter and the difference between the reference current and the current measurement, and

summers (6, 7, 8) which are able to determine final power-supply voltage setpoints for the electric machine by summing the attenuation voltages relating to each phase and the power-supply voltages relating to the corresponding phases in order to obtain final power-supply voltage setpoints for the electric machine.

# FIG.1

# FIG.2

## RÉFÉRENCES CITÉES DANS LA DESCRIPTION

**Documents brevets cités dans la description**

- EP 0682827 A
- EP 2460244 A
- FR 2978888
- EP 1906523 A